# EUROPÄISCHE PATENTANMELDUNG

(11) **EP 4 371 689 A1**
(43) Veröffentlichungstag der Anmeldung: **22.05.2024**
(21) Anmeldenummer: 22207905.5
(22) Anmeldetag: 16.11.2022
(51) Int. Cl.: B23K 15/00, B23K 15/04, B23K 26/282, B23K 33/00, B60B 35/02, F16C 3/02, B60B 35/08, B23K 101/00, B23K 103/04

(54) **EISENBAHNWELLE**

(71) Anmelder: Fimbinger, Johann, 8401 Kalsdorf (AT)
(72) Erfinder: Fimbinger, Johann, 8401 Kalsdorf (AT); Bonss, Steffen, 98544 Zella-Mehlis (DE)
(74) Vertreter: Grättinger Möhring von Poschinger Patentanwälte Partnerschaft mbB

(57) **Zusammenfassung**

Die Erfindung betrifft eine Eisenbahnwelle, insbesondere als Laufachse oder Triebachse in Leichtbauweise, welche mehrteilig durch Fügen ausgebildet ist, wobei die Fügeteile ein dünnwandig gezogenes Rohr (1) mit an beiden Enden angeschweißten Achszapfen (2) umfassen und zumindest auf ihrer inneren Oberfläche vor dem Fügen fertig bearbeitet sind, wobei die Schweißverbindung zwischen Rohr (1) und Achszapfen (2) im Strahlschweißverfahren hergestellt ist und wobei die fertige Schweißnaht (3) innerhalb der Fügezone (4) eine nach Innen geschlossene Raumform ausbildet.

## Beschreibung

Die Erfindung betrifft eine Eisenbahnwelle, insbesondere als Laufachse oder Triebachse in Leichtbauweise, welche mehrteilig durch Fügen ausgebildet ist.

Eisenbahnwellen sind üblicherweise einschließlich der Achszapfen einstückig aus einem Vergütungsstahl mit geringem Kohlenstoffgehalt gefertigt, wobei sie eine axiale Längsbohrung für eine turnusmäßig durchzuführende Ultraschall-Rissprüfung aufweisen.

Ferner wurden auf dem Gebiet des Automobilbaus Herstellungsverfahren zum rissfreien Fügen von Bauteilen aus härtbaren Stählen entwickelt (vgl. BOESE, U.: Das Verhalten der Stähle beim Schweißen, Teil I: Grundlagen, in Fachbuchreihe Schweißtechnik Band 44/I, DVS-Verlag Düsseldorf 1995). Dabei handelt es sich um Bauteile des Antriebsstrangs von Automobilen wie Antriebswellen, Getriebewellen und dergleichen, die aus mehreren Bauteilen aus härtbaren Stählen durch Fügen und induktiv unterstütztes Laserstrahlschweißen miteinander prozesssicher verbunden sind. Durch diese moderne Verbindungstechnik wird nicht nur eine erhebliche Reduzierung der Eigenmasse derartiger Bauteile erreicht, insbesondere wird das rissfreie Verschweißen eines unlegierten, niedriglegierten bzw. legierten Stahls mit einem Baustahl oder einem artgleichen oder anderen Vergütungsstahl, bei Vermeidung von hohen Eigenspannungen und schroffen Härte- und Gefügegraden ermöglicht.

Das rissfreie Strahlschweißen von Maschinenbauteilen aus härtbaren Stählen erfolgt, wie in DE 19637465 C1 beschrieben, üblicherweise mit Hilfe einer Kurzzeitwärmebehandlung, derart, dass die kritische Abschreckgeschwindigkeit, die sonst zur Bildung von Martensit und damit zu unerwünschter Härtung führt, nicht erreicht wird.

Demgegenüber liegt der vorliegenden Erfindung die Aufgabe zugrunde, bei der Herstellung von Eisenbahnwellen in Leichtbauweise die Schweißverbindung der einzelnen durch Fügen zusammengesetzten Bauteile unter Vermeidung von Rissbildung und unregelmäßigen Oberflächenbereichen der zusammengesetzten Bauteile im Bereich der Schweißnähte zu gewährleisten und dabei gleichzeitig den Fertigungsaufwand hinsichtlich Form und Materialwahl der Fügeteile sowie den damit verbundenen Aufwand an Energie zu reduzieren.

Vorgenannte Aufgabe wird erfindungsgemäß mit den in Patentanspruch 1 genannten Merkmalen gelöst. Lediglich beispielshaft wird hierzu für das Rohr ein höherfester Baustahl wie S690 und für die Achszapfen ein Vergütungsstahl mit geringerem Kohlenstoffgehalt, wie 25CrMo4 oder ein artgleicher Stahl, vorgeschlagen. Zumindest für dünnwandig gezogene Rohre ist die Werkstoffauswahl auf dem Markt eingeschränkt, so dass die Schweißparameter jeweils speziell an unterschiedliche Stähle angepasst werden müssen.

Wie zu Laufachsen für die Achszapfen oben näher ausgeführt besitzen Triebachsen eine weitere Schweißverbindung für die Rohranschlüsse an ein zwischen Rohrabschnitten eingebautes Antriebselement, auf welchem das Zahnrad für den Wellenantrieb aufgeschrumpft ist.

Im Rahmen des Lösungsgedankens entsprechend der Merkmalskombination nach Patentanspruch 1 wird die angestrebte effiziente Herstellung von Eisenbahnwellen in großindustriellem Maßstab ermöglicht. Durch die Verwendung marktüblicher dünnwandiger Rohre, welche mit weiteren Fügebauteilen im Strahlschweißverfahren verbunden sind, wird eine neuartige, besonders wirtschaftliche Achsenkonstruktion geschaffen.

Die bekannte Alternative der Reibschweißverbindung und die damit realisierte Vorwärmung zur Vermeidung lokaler Härtung im Bereich der Fügezone sowie eine erforderliche Nachbearbeitung von wulstförmigen Ausformungen der Schweißnaht können somit vergleichsweise entfallen. Dies gilt ebenso für eine prozessbedingt verdickte Ausbildung der Rohre und der Achszapfen im Fügezonenbereich. Demgegenüber wird erfindungsgemäß eine freie Gestaltung der Achszapfen für den Anschluss der Radkörper ermöglicht, wobei deren Volumina materialsparend dimensioniert werden können.

Besonders vorteilhaft ist nach einer Ausgestaltung der Erfindung die Ausbildung der Raumform für den Schweißkörper in radialer Richtung des Rohres im Fügebereich, indem dort das Rohrende jeweils auf einen umlaufenden Bund des Achszapfens geschoben wird, der die radiale Ausdehnung des Schweißkörpers nach innen begrenzt. Dieser Bund in Form eines axial vorspringenden Rings dient zunächst der Aufnahme des zugewandten Rohrendes als Fügeposition. Auf diese Weise wird sichergestellt, dass eine Ausformung der Schweißnaht in das Rohrinnere zuverlässig unterbleibt.

Dementsprechend kommt als Rohr vorteilhaft ein durch Ziehen hergestelltes Präzisionsrohr in Frage, bevorzugt aus einem höherfesten Baustahl wie S690 oder auch aus einem zum Achszapfen artgleichen Vergütungsstahl.

Die Achszapfen können vorteilhaft aus geschmiedeten Rohlingen aus Vergütungsstahl mit geringerem Kohlenstoffgehalt, bevorzugt 25CrMo4 hergestellt sein. Auch hier sind Varianten denkbar, wie beispielsweise 34CrNiMo6 oder 42CrMo4.

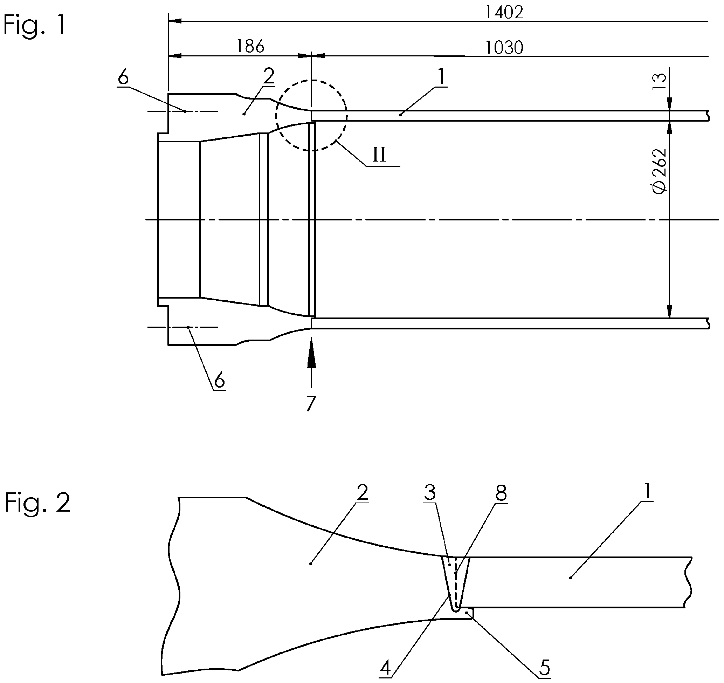

Die Erfindung wird im Folgenden anhand der Zeichnung mit den Figuren 1 und 2 erläutert.
Die Figur 1 zeigt einen axialen Längsschnitt durch eine Leichtbaueisenbahnwelle am Beispiel einer Laufachse mit im Bereich eines Rohrendes angeschlossenem Achszapfen;
Figur 2 zeigt in vergrößerter Darstellung gemäß II der Figur 1 die Ausgestaltung des Anschlussbereichs.

Figur 1 zeigt einen Achsabschnitt im Anschlussbereich einer Eisenbahnlaufachse zwischen dem Ende eines die Achse bildenden Rohrs (1) und dessen Anschluss an den zugehörigen Achszapfen (2) in verkleinerter Darstellung. Im Achszapfen (2) sind mit strichpunktierten Linien die Mittelachsen (6) von umlaufend angeordneten (nicht dargestellten) Flanschschrauben zur Befestigung des Radkörpers eingezeichnet.

Zur Darstellung der realen Größenverhältnisse sind beispielhafte Millimeter-Maßangaben ergänzt betreffend die gesamte Rohrlänge von 1030 mm, den Abstand von 186 mm vom Ende des Rohres (1) zum Anschlussflansch des (nicht gezeichneten) Radkörpers, sowie die Wandstärke von 13 mm des Rohres (1) und dessen Innendurchmesser von 262 mm.

Die Laserschweißposition (7) gemäß Figur 1 zeigt auf die dort im einzelnen nicht erkennbare Ausgestaltung der eigentlichen Fügezone (4), welche in Figur 2 etwa in realer Größe dargestellt ist. Innerhalb der strichlierten Fügezone (4) befindet sich die Schmelzzone (3) des späteren Schweißkörpers (3), welcher die Verbindung zwischen dem Rohrende (8) des Rohres (1) und dem zugewandten Ende des zugeordneten Achskörpers (2) darstellt.

Um die Enden beider Fügeteile für die Schweißverbindung entsprechend der Laserschweißposition (7) präzise zu positionieren, ist am Innenumfang des Achszapfens (2) ein axial vorspringender ringförmiger Bund (5) angeformt, auf welchem das zugeordnete Rohrende (8) zur genauen Positionierung der Fügeverbindung aufgesteckt wird, bevor der Laserprozess beginnt. Das rohrinnere Ende des umlaufend gebildeten Schweißkörpers (3) durchdringt beide Fügeteile (1, 2), nämlich die Wand des Rohres (1) im Bereich des Rohrendes (8) vollständig und ragt geringfügig darüber hinaus in den Bund (5) des Achszapfens (2) hinein, ohne jedoch den Innenraum der Laufachse im Bereich der Fügeverbindung zu erreichen. Auf diese Weise wird sichergestellt, dass die Schmelzzone des Schweißkörpers (3) gleichmäßig an der Außenseite der Fügeverbindung endet, so dass dort ein im wesentlichen bündiger Anschluss beider Fügeteile (1, 2) ohne Nachbearbeitung des Außenumfangs der Schweißnaht (3) erzielt werden kann. Die axiale Länge des Bundes (5) innerhalb des Rohrendes beträgt etwa 7 mm, dessen Wandstärke in radialer Richtung ca. 5 mm, bei einer Wandstärke des Rohres (1) von 13 mm.

## Patentansprüche

1. Eisenbahnwelle, insbesondere als Laufachse oder Triebachse in Leichtbauweise, welche mehrteilig durch Fügen ausgebildet ist, **dadurch gekennzeichnet,**
**dass** die Fügeteile ein dünnwandig gezogenes Rohr (1) mit an beiden Enden angeschweißten Achszapfen (2) umfassen,
**dass** die Fügeteile zumindest auf ihrer inneren Oberfläche vor dem Fügen fertig bearbeitet sind,
**dass** die Schweißverbindung zwischen Rohr (1) und Achszapfen (2) im Strahlschweißverfahren hergestellt ist und
**dass** die fertige Schweißnaht (3) innerhalb der Fügezone (4) eine nach Innen geschlossene Raumform ausbildet.

2. Eisenbahnwelle nach Anspruch 1,
**dadurch gekennzeichnet,**
**dass** die Achszapfen (2) aus geschmiedeten Rohlingen aus Vergütungsstahl mit geringem Kohlenstoffgehalt hergestellt sind.

3. Eisenbahnwelle nach Anspruch 1,
**dadurch gekennzeichnet,**
**dass** das Rohr (1) als Präzisionsrohr durch Ziehen aus einem höherfesten Baustahl oder einem zum Achszapfen artgleichen Vergütungsstahl hergestellt ist.

4. Eisenbahnwelle nach Anspruch 1,
**dadurch gekennzeichnet,**
**dass** die Schweißverbindung durch Laserstrahlschweißen erzeugt ist.

5. Eisenbahnwelle nach Anspruch 1,
**dadurch gekennzeichnet,**
**dass** die Raumform für den Schweißkörper (3) in radialer Richtung des Rohrs (1) in der Fügezone (4) durch einen umlaufenden Bund (5) des Achszapfens (2) begrenzt ist, welcher als axial vorspringender Ring zur Aufnahme des zugewandten Rohrendes (8) ausgebildet ist.

## Geänderte Patentansprüche

### Geänderte Patentansprüche gemäss Regel 137(2) EPÜ.

1. Eisenbahnwelle, insbesondere als Laufachse oder Triebachse in Leichtbauweise, welche mehrteilig durch Fügen ausgebildet ist, wobei die Fügeteile ein dünnwandig gezogenes Rohr (1) mit an beiden Enden angeschweißten Achszapfen (2) umfassen und zumindest auf ihrer inneren Oberfläche vor dem Fügen fertig bearbeitet sind, und wobei die Raumform für den Schweißkörper (3) in radialer Richtung des Rohrs (1) in der Fügezone (4) durch einen umlaufenden Bund (5) des zugeordneten Achszapfens (2) begrenzt ist, welcher als axial vorspringender Ring zur Aufnahme des zugewandten Rohrendes (8) ausgebildet ist, **dadurch gekennzeichnet,**
**dass** die Schweißverbindung zwischen Rohr (1) und Achszapfen (2) im Strahlschweißverfahren hergestellt ist und
**dass** die fertige Schweißnaht innerhalb der Fügezone (4) eine nach Innen geschlossene Raumform ausbildet, wobei sich der Schweißkörper (3) der Schweißnaht geringfügig über die Wand des Rohrendes (8) hinaus in den Bund (5) des Achszapfens (2) hineinerstreckt.

2. Eisenbahnwelle nach Anspruch 1,
**dadurch gekennzeichnet,**
**dass** die Achszapfen (2) aus geschmiedeten Rohlingen aus Vergütungsstahl mit geringem Kohlenstoffgehalt hergestellt sind.

3. Eisenbahnwelle nach Anspruch 1,
**dadurch gekennzeichnet,**
**dass** das Rohr (1) als Präzisionsrohr durch Ziehen aus einem höherfesten Baustahl oder einem zum Achszapfen artgleichen Vergütungsstahl hergestellt ist.

4. Eisenbahnwelle nach Anspruch 1,
**dadurch gekennzeichnet,**
**dass** die Schweißverbindung durch Laserstrahlschweißen erzeugt ist.

5. Eisenbahnwelle nach Anspruch 1,
**dadurch gekennzeichnet,**
**dass** als Baustahl für das Rohr (1) S690 vorgesehen ist.

6. Eisenbahnwelle nach Anspruch 1,
**dadurch gekennzeichnet,**
**dass** als Vergütungsstahl für den Achszapfen (2) 25CrMo4 vorgesehen ist.
